# EUROPEAN PATENT APPLICATION

(11) **EP 4 797 096 A1**
(43) Date of publication of application: **26.08.2026**
(21) Application number: 24887295.4
(22) Date of filing: 26.04.2024
(51) Int. Cl.: G06F 9/50

(54) **SCHEDULING METHOD AND APPARATUS AND ELECTRONIC DEVICE**

(30) Priority: 07.11.2023 CN 202311476530
(71) Applicant: HUAWEI TECHNOLOGIES CO., LTD., Shenzhen 518129 (CN)
(72) Inventor: JIN, Jikun, Shenzhen, Guangdong 518129 (CN); CUI, Wenlin, Shenzhen, Guangdong 518129 (CN); ZHANG, Ji, Shenzhen, Guangdong 518129 (CN); PENG, Xiandong, Shenzhen, Guangdong 518129 (CN)
(74) Representative: Epping - Hermann - Fischer
(86) International application number: PCT/CN2024/090163
(87) International publication number: WO 2025/097671

(57) **Abstract**

A scheduling method is provided, performed by an energy efficiency scheduling system. The energy efficiency scheduling system obtains running data of a plurality of cores, and inputs the running data of the plurality of cores and training data of the plurality of cores into an energy efficiency model, to adjust quantities of different types of cores. The different types of cores are cores that execute compute tasks according to different running policies.

## Description

This application claims priority to Chinese Patent Application No. 202311476530.9, filed with the China National Intellectual Property Administration on November 7, 2023 and entitled "SCHEDULING METHOD AND APPARATUS, AND ELECTRONIC DEVICE", which is incorporated herein by reference in its entirety.

### TECHNICAL FIELD

The present invention relates to the field of chip technologies, and in particular, to a scheduling method and apparatus, and an electronic device.

### BACKGROUND

Low power consumption and high energy efficiency are two important performance metrics for electronic devices, and they are key indicators of electronic devices' competitiveness. Due to limitations of Moore's Law and increasing difficulty of advancing chip manufacturing process technologies, it is difficult for electronic devices to reduce power consumption by shrinking a process node, to increase energy efficiency. As a result, electronic devices can now only improve energy efficiency by adjusting operating modes of chips inside the electronic devices at the software level.

### SUMMARY

To resolve the foregoing problem, embodiments of this application provide a scheduling method, to dynamically adjust an operating state of each core. In this way, power consumption of each core is reduced while use performance of the core is maintained, to increase energy efficiency of an electronic device. In addition, this application further provides a scheduling apparatus and an electronic device that correspond to the scheduling method.

Therefore, the following technical solutions are used in embodiments of this application. According to a first aspect, an embodiment of this application provides a scheduling method. The method is performed by an energy efficiency scheduling system. The method includes: obtaining running data of a plurality of cores, where the running data is state data of the core obtained when the core executes a compute task; and inputting the running data of the plurality of cores and training data of the plurality of cores into an energy efficiency model, to obtain an adjustment policy, where the adjustment policy is for adjusting quantities of different types of cores, the training data is an attribute parameter of the core, the different types of cores are cores that execute compute tasks according to different running policies, and the running policy is a state parameter of the core used when the core executes the compute task.

In this implementation, the energy efficiency scheduling system may input current running data and current training data of the cores into the energy efficiency model, so that the energy efficiency model adjusts the running policies of the cores based on energy efficiency values of the plurality of cores. In comparison with that a running policy of a core cannot be changed in a related technology, the energy efficiency scheduling system in this application may cause a core to select an appropriate running policy to execute a compute task, so that the core reduces power consumption while maintaining use performance, to increase energy efficiency of an electronic device.

In an implementation, before the obtaining the running data of the plurality of cores, the method further includes: determining a quantity of energy efficiency domains based on a current application scenario of the energy efficiency scheduling system, where the quantity of energy efficiency domains is associated with an application scenario of the energy efficiency scheduling system; and allocating the plurality of cores to different energy efficiency domains.

In this implementation, a quantity of energy efficiency domains that is set by the energy efficiency scheduling system for the electronic device is related to an application scenario of the electronic device. The energy efficiency scheduling system may determine the quantity of energy efficiency domains based on a current application scenario of the electronic device, and select an appropriate quantity of running policies for the plurality of cores. The energy efficiency scheduling system associates a quantity of running policies run by the cores with an application scenario, to better increase energy efficiency of the electronic device in different application scenarios.

In an implementation, the allocating the plurality of cores to the different energy efficiency domains specifically includes: allocating the plurality of cores to the different energy efficiency domains based on an allocation ratio of cores corresponding to the current application scenario of the energy efficiency scheduling system.

In this implementation, the energy efficiency scheduling system obtains cores in each chip inside the electronic device, and sorts the cores based on levels of performance of the cores. Then, the energy efficiency scheduling system allocates a plurality of cores of the electronic device to the energy efficiency domains based on an allocation ratio of cores corresponding to the current application scenario of the electronic device, so that each core operates in an optimal energy efficiency state, to increase the energy efficiency of the electronic device.

In an implementation, the inputting the running data of the plurality of cores and the training data of the plurality of cores into the energy efficiency model, to obtain the adjustment policy specifically includes: determining a current energy efficiency value and an optimal energy efficiency value of each core based on the running data of the plurality of cores and the training data of the plurality of cores; and when a current energy efficiency value of each core in a first energy efficiency domain is greater than an optimal energy efficiency value of the core, obtaining a first adjustment sub-policy, where the first adjustment sub-policy is for migrating a part of the cores in the first energy efficiency domain to another energy efficiency domain, the different energy efficiency domains include the first energy efficiency domain, and the adjustment policy includes the first adjustment sub-policy; or when the current energy efficiency value of each core in the first energy efficiency domain is less than the optimal energy efficiency value of the core, obtaining a second adjustment sub-policy, where the second adjustment sub-policy is for migrating a core in another energy efficiency domain to the first energy efficiency domain, and the adjustment policy includes the second adjustment sub-policy.

In this implementation, the energy efficiency scheduling system may dynamically adjust a quantity of cores in an energy efficiency domain based on the current energy efficiency values and the optimal energy efficiency values of the cores, to increase the energy efficiency of the electronic device. If a current energy efficiency value of each core in an energy efficiency domain is greater than an optimal energy efficiency value, it indicates that there are a large quantity of cores in the energy efficiency domain, and computational power is sufficient. A part of the cores in a current energy efficiency domain may be migrated to another energy efficiency domain, so that current energy efficiency values of remaining cores are reduced to optimal energy efficiency values, to reduce power consumption of the electronic device. If a current energy efficiency value of each core in an energy efficiency domain is less than an optimal energy efficiency value, it indicates that there are a small quantity of cores in the energy efficiency domain, and computational power is insufficient. A part of the cores in another energy efficiency domain may be migrated to a current energy efficiency domain, so that a current energy efficiency value of the core in the current energy efficiency domain is increased to an optimal energy efficiency value, to reduce power consumption of the electronic device.

In an implementation, the method further includes: obtaining a plurality of compute tasks of the energy efficiency scheduling system; determining performance priorities and energy efficiency priorities of the plurality of compute tasks based on attribute information of the plurality of compute tasks and labels of the compute tasks, where the attribute information includes one or more of execution time and load, and the label includes one or more of an importance level and an energy efficiency weight value; inputting the performance priorities and the energy efficiency priorities of the plurality of compute tasks into a scheduling objective function, to obtain task feature vectors of the plurality of compute tasks; and allocating the plurality of compute tasks to task queues of the different types of cores based on the task feature vectors of the plurality of compute tasks.

In this implementation, the energy efficiency scheduling system obtains the compute tasks, and calculates the performance priorities and the energy efficiency priorities of the compute tasks. The energy efficiency scheduling system may convert the performance priorities and the energy efficiency priorities of the compute tasks into task feature vectors in a numerical form, allocate compute tasks with different task feature vectors to task queues of cores with different running policies, accurately allocate a compute task having a high performance requirement to a high-performance core, and allocate a compute task having a low performance requirement to a low-performance core, to improve efficiency of executing different types of compute tasks by the electronic device.

According to a second aspect, an embodiment of this application provides a scheduling apparatus, including: a transceiver unit, configured to obtain running data of a plurality of cores, where the running data is state data of a core obtained when the core executes a compute task; and a processing unit, configured to input the running data of the plurality of cores and training data of the plurality of cores into an energy efficiency model, to obtain an adjustment policy, where the adjustment policy is for adjusting quantities of different types of cores, the training data is an attribute parameter of the core, the different types of cores are cores that execute compute tasks according to different running policies, and the running policy is a state parameter of the core used when the core executes the compute task.

In an implementation, the processing unit is further configured to: determine a quantity of energy efficiency domains based on a current application scenario of an energy efficiency scheduling system, where the quantity of energy efficiency domains is associated with an application scenario of the energy efficiency scheduling system; and allocate the plurality of cores to different energy efficiency domains.

In an implementation, the processing unit is specifically configured to allocate the plurality of cores to the different energy efficiency domains based on an allocation ratio of cores corresponding to the current application scenario of the energy efficiency scheduling system.

In an implementation, the processing unit is specifically configured to: determine a current energy efficiency value and an optimal energy efficiency value of each core based on the running data of the plurality of cores and the training data of the plurality of cores; and when a current energy efficiency value of each core in a first energy efficiency domain is greater than an optimal energy efficiency value of the core, obtain a first adjustment sub-policy, where the first adjustment sub-policy is for migrating a part of the cores in the first energy efficiency domain to another energy efficiency domain, the different energy efficiency domains include the first energy efficiency domain, and the adjustment policy includes the first adjustment sub-policy; or when the current energy efficiency value of each core in the first energy efficiency domain is less than the optimal energy efficiency value of the core, obtain a second adjustment sub-policy, where the second adjustment sub-policy is for migrating a core in another energy efficiency domain to the first energy efficiency domain, and the adjustment policy includes the second adjustment sub-policy. In an implementation, the processing unit is further configured to: obtain a plurality of compute tasks of the energy efficiency scheduling system; determine performance priorities and energy efficiency priorities of the plurality of compute tasks based on attribute information of the plurality of compute tasks and labels of the compute tasks, where the attribute information includes one or more of execution time and load, and the label includes one or more of an importance level and an energy efficiency weight value; input the performance priorities and the energy efficiency priorities of the plurality of compute tasks into a scheduling objective function, to obtain task feature vectors of the plurality of compute tasks; and allocate the plurality of compute tasks to task queues of the different types of cores based on the task feature vectors of the plurality of compute tasks.

According to a third aspect, an embodiment of this application provides an electronic device. The electronic device includes at least one memory and at least one processor. Each processor includes a plurality of cores. One of the at least one processor is configured to execute instructions stored in the memory, to cause the electronic device to perform the method according to the possible implementations of the first aspect.

According to a fourth aspect, an embodiment of this application provides a computer-readable storage medium. The computer-readable storage medium includes computer program instructions. When the computer program instructions are executed by an electronic device, the electronic device performs the methods according to the possible implementations of the first aspect.

According to a fifth aspect, an embodiment of this application provides a computer program product including instructions. The computer program product stores the instructions. When the instructions are executed by an electronic device, the electronic device is caused to implement the methods according to the possible implementations of the first aspect.

### BRIEF DESCRIPTION OF DRAWINGS

The following briefly describes accompanying drawings used in descriptions of embodiments or a conventional technology.
FIG. 1 is a diagram of a structure of an energy efficiency scheduling system according to an embodiment of this application;
FIG. 2 is a diagram of configuring running policies for different energy efficiency domains according to an embodiment of this application;
FIG. 3 is a diagram of an execution process of an energy efficiency model according to an embodiment of this application;
FIG. 4 is a diagram of adjusting quantities of cores in different energy efficiency domains based on load of a foreground task and load of a background task according to an embodiment of this application;
FIG. 5 is a schematic flowchart of a scheduling method according to an embodiment of this application; and
FIG. 6 is a diagram of a structure of a scheduling apparatus according to an embodiment of this application.

### DESCRIPTION OF EMBODIMENTS

The following describes technical solutions in embodiments of this application with reference to the accompanying drawings in embodiments of this application.

The term "and/or" in the specification describes an association relationship between associated objects and represents that three relationships may exist. For example, A and/or B may represent the following three cases: Only A exists, both A and B exist, and only B exists. The character "/" in the specification represents an "or" relationship between the associated objects. For example, A/B represents A or B.

In the specification and the claims in the specification, the terms such as "first" and "second" are intended to distinguish between different objects, but do not indicate a particular order of the objects. For example, a first response message, a second response message, and the like are intended to distinguish between different response messages, but do not indicate a particular order of the response messages.

In embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. In particular, use of the terms such as "example" or "for example" are intended to present a related concept in a specific manner.

In descriptions of embodiments of this application, unless otherwise specified, "a plurality of" means two or more. For example, a plurality of processing units mean two or more processing units, and a plurality of elements mean two or more elements.

Energy efficiency is a metric for measuring a relationship between chip's performance and power consumption. It is commonly used for measuring a ratio of energy consumption to chip's performance delivered when the chip completes a specific task. High energy efficiency means that the chip completes more operations with less energy, indicating that the chip has higher energy efficiency.

In related technologies, a central processing unit (central processing unit, CPU) inside a Dorado device may include a plurality of cores (cores). The plurality of cores of the CPU are separately bound to other components of the Dorado device, to control operations of the other components. The Dorado device may poll the plurality of cores by using a completely fair scheduler (completely fair scheduler, CFS) to invoke a large quantity of polling policies. When the Dorado device detects that components managed by a part of the cores do not operate, the core may be caused to stop operating or be in a sleep state, to reduce power consumption of the Dorado device and increase energy efficiency of the Dorado device. However, when the Dorado device is under a low workload, the CPU still polls the plurality of cores by using the large quantity of polling policies. As a result, the CPU still runs with high power consumption when the Dorado device is under the low workload.

In another related technology, a Dorado device may use an energy-aware scheduling (energy-aware scheduling, EAS) technology, so that a core with highest energy efficiency runs a task (task). However, the EAS technology heavily depends on a processor with a big-little core architecture, and differentiated scheduling cannot be performed based on energy consumption requirements and performance requirements of different tasks. As a result, the Dorado device has extremely high power consumption, and the EAS technology cannot be applied to a storage system.

To resolve disadvantages in the related technologies, embodiments of this application provide a scheduling method, an energy efficiency scheduling system, and an electronic device. The energy efficiency scheduling system calculates energy efficiency values of a plurality of cores by using an energy efficiency model, and then adjusts running policies of the cores based on the energy efficiency values of the cores, so that the cores select appropriate running policies to execute compute tasks. In this way, power consumption of the cores is reduced while use performance of the cores is maintained, to increase energy efficiency of the electronic device.

The electronic device may be a device such as a server, a computer, a smartphone, a notebook computer, a tablet computer, an uncrewed aerial vehicle, a storage server, a router, a network switch, or a game console. Preferably, the electronic device may be a storage server, for example, a server of a centralized storage system or a server of a distributed storage system.

The electronic device includes at least a processor and a memory. The processor may be a CPU, a data processing unit (data processing unit, DPU), a neural processing unit (neural processing unit, NPU), a graphics processing unit (graphics processing unit, GPU), or the like. The processor may control each piece of hardware of the electronic device to operate, to implement each compute task and each function of the electronic device.

The memory may be a semiconductor storage medium, for example, a solid-state drive (solid state disk, SSD) or a flash memory. The memory may be a magnetic storage medium, for example, a floppy disk, a hard disk drive, or a magnetic tape. The memory may be an optical storage medium, for example, a high-density digital video disc (digital video disc, DVD). The memory may store software run by the processor, to support the processor in controlling each piece of hardware of the electronic device to operate. The memory may store data received by the electronic device, intermediate data processed by the processor, generated data, and the like. The energy efficiency scheduling system is a system that includes hardware for implementing energy efficiency scheduling in the electronic device.

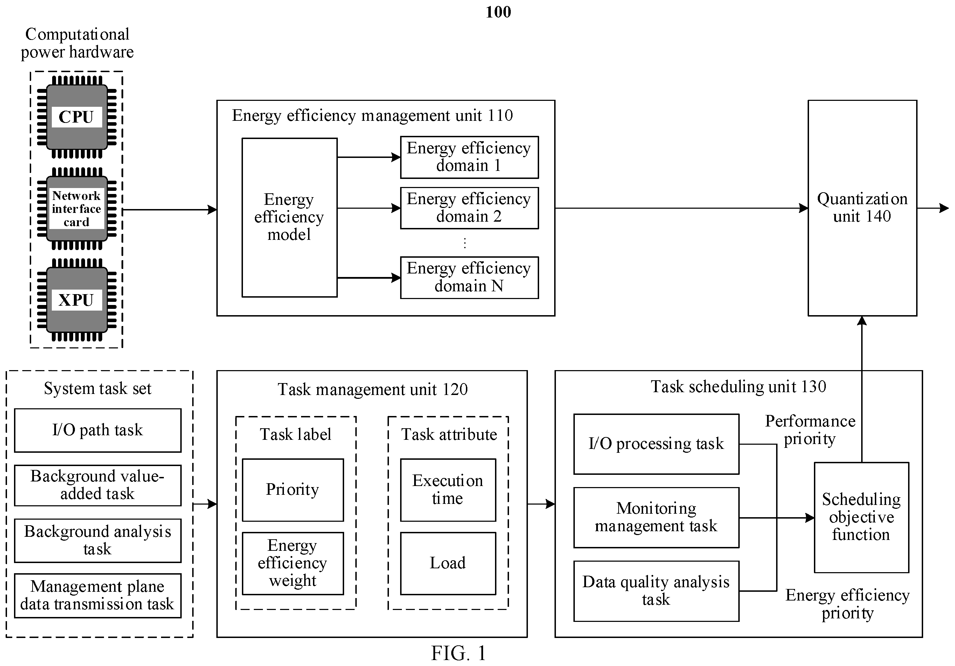

FIG. 1 is a diagram of a structure of an energy efficiency scheduling system according to an embodiment of this application. As shown in FIG. 1, the energy efficiency scheduling system 100 includes an energy efficiency management unit 110, a task management unit 120, a task scheduling unit 130, and a quantization unit 140.

The energy efficiency management unit 110 may run an energy efficiency model, and is configured to: partition, based on a current workload of an electronic device and specification parameters of cores in each chip, cores with different specifications in each chip into different energy efficiency domains, or partition cores with a same specification into a plurality of energy efficiency domains, so that each core operates in an optimal energy efficiency state.

The energy efficiency domain refers to an optimization method for resource allocation in an energy system, where a core processes a specified compute task according to a preset running policy. The energy efficiency scheduling system 100 may configure different running policies for the energy efficiency domains, so that cores in a same energy efficiency domain execute compute tasks according to a same running policy, and cores in different energy efficiency domains execute different compute tasks according to different running policies. The running policy is a state parameter of the core used when the core executes the compute task, for example, a main frequency, an idle (idle) policy, whether to use a polling policy, and maximum power consumption.

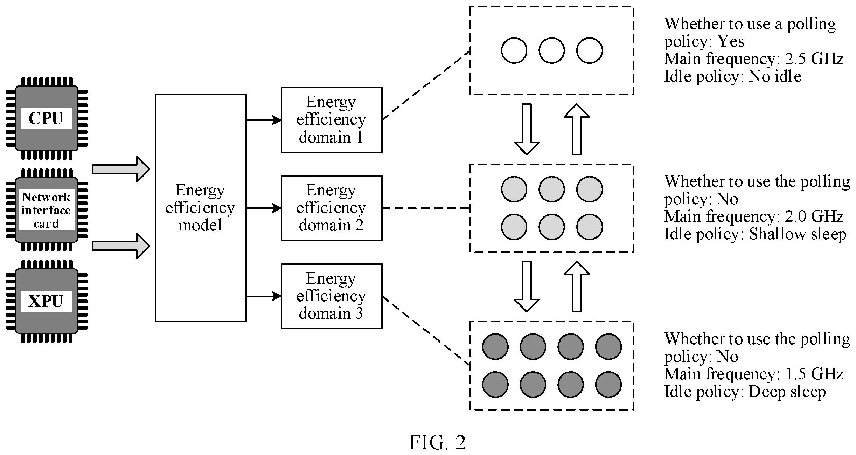

In an embodiment, as shown in FIG. 2, the energy efficiency scheduling system 100 may set three energy efficiency domains: an energy efficiency domain 1, an energy efficiency domain 2, and an energy efficiency domain 3. A running policy configured by the energy efficiency scheduling system 100 for each energy efficiency domain includes a main frequency, an idle policy, and whether to use a polling policy. The running policy configured for the energy efficiency domain 1 is that the main frequency is 2.5 GHz, the idle policy is that a core is not in an idle state, and the polling policy is used. The running policy configured for the energy efficiency domain 2 is that the main frequency is 2.0 GHz, the idle policy is that a core is in a shallow sleep state, and the polling policy is not used. The running policy configured for the energy efficiency domain 3 is that the main frequency is 1.5 GHz, the idle policy is that a core is in a deep sleep state, and the polling policy is not used.

A quantity of energy efficiency domains that is set by the energy efficiency scheduling system 100 for the electronic device is related to an application scenario of the electronic device. For example, when the electronic device is in a standby state, the energy efficiency scheduling system 100 may set two energy efficiency domains, where a core in one energy efficiency domain is in an operating state, and a core in the other energy efficiency domain is in an idle state. For another example, when the electronic device operates in an overload state, the energy efficiency scheduling system 100 may set three energy efficiency domains, where a core in an energy efficiency domain is in an overload state, a core in an energy efficiency domain is in a normal operating state, and a core in another energy efficiency domain is in an idle state. Preferably, the energy efficiency scheduling system 100 sets three energy efficiency domains in most application scenarios of the electronic device.

The energy efficiency scheduling system 100 configures different running policies for the energy efficiency domains, so that the energy efficiency domains are at different levels. A running policy configured for a high-level energy efficiency domain causes a core to have characteristics of high performance and high power consumption, and an input/output (input/output, I/O) path task or another task that has a high performance requirement in the electronic device may be processed. A running policy configured for a low-level energy efficiency domain causes a core to have characteristics of poor performance and low power consumption, and a background task or a performance-insensitive service in the electronic device may be processed. In embodiments of this application, the running policies configured by the energy efficiency scheduling system 100 for the different energy efficiency domains are continuous, so that when performance of a core in a high-level energy efficiency domain deteriorates, the core is automatically migrated to a lower-level energy efficiency domain, to avoid a problem that the core does not operate due to performance deterioration.

The energy efficiency scheduling system 100 may configure an allocation ratio of cores for the energy efficiency domains. The allocation ratio of the cores is generally determined based on factors such as load and an application scenario of the electronic device in an initialization phase. The energy efficiency scheduling system 100 may obtain the quantity of energy efficiency domains based on the application scenario of the electronic device, and determine a quantity of "terms" of an allocation ratio of compute tasks based on the quantity of energy efficiency domains. In different application scenarios, computational power for processing the compute tasks in the energy efficiency domains is different. The energy efficiency scheduling system 100 may determine a quantity of cores in each energy efficiency domain based on computational power of a single core and total computational power needed by each energy efficiency domain, and use the quantity of cores in each energy efficiency domain as a sum of values of the "terms", to obtain allocation ratios of the cores in different application scenarios.

In the initialization phase of the electronic device, the energy efficiency management unit 110 obtains the cores in each chip inside the electronic device, and sorts the cores based on levels of performance of the cores. Then, the energy efficiency management unit 110 allocates a plurality of cores of the electronic device to the energy efficiency domains based on an allocation ratio of cores corresponding to a current application scenario of the electronic device, so that each core operates in an optimal energy efficiency state. In a process of allocating the cores, the energy efficiency management unit 110 allocates a high-performance core to a high-level energy efficiency domain, and allocates a low-performance core to a low-level energy efficiency domain. The chip may be a CPU, a DPU, a network interface card, or the like.

In an embodiment, it is assumed that there are three energy efficiency domains, there are 40 cores, and an allocation ratio is 4:4:2. The energy efficiency management unit 110 sorts the cores based on performance in descending order, and then allocates 1^{st} to 16^{th} cores to a high-level energy efficiency domain, allocates 17^{th} to 32^{nd} cores to a middle-level energy efficiency domain, and allocates 33^{rd} to 40^{th} cores to a low-level energy efficiency domain.

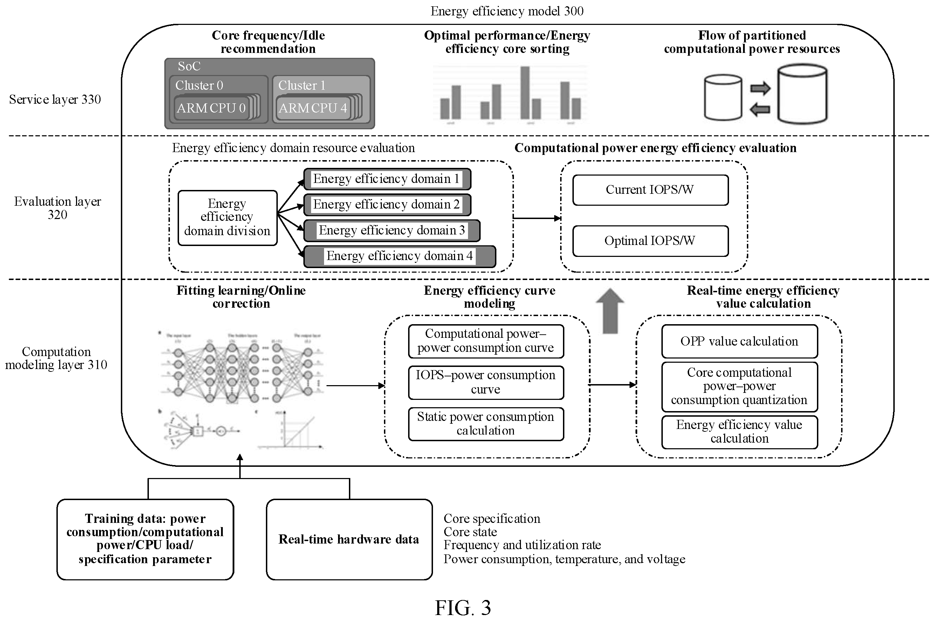

The energy efficiency model is a mathematical model for evaluating and analyzing a relationship between energy consumption and performance of the electronic device. As shown in FIG. 3, an energy efficiency model 300 may be divided into a computation modeling layer 310, an evaluation layer 320, and a service layer 330 from a perspective of software.

The computation modeling layer 310 is configured to convert a physical characteristic, a circuit structure, and a process parameter of a chip into a mathematical model. The mathematical model may describe power consumption and performance of the chip under different workloads. The computation modeling layer 310 may construct the mathematical model based on experimental data, a simulation result, or a statistical method, and associate a physical feature of the chip with an energy efficiency indicator. In embodiments of this application, the energy efficiency model 300 may receive training data and real-time running data of each core. The training data is an attribute parameter of each core of the electronic device, such as computational power, load, power consumption, and input/output operations per second (input/output operations per second, IOPS). The real-time running data is state data of each core at a current moment, such as a main frequency, a utilization rate of computational power, power consumption, a temperature, a voltage, and IOPS. The computation modeling layer 310 uses a core as a basic unit, and performs energy efficiency modeling based on the training data and the real-time running data of each core, to obtain a modeling relationship between the pieces of data of each core. For example, the computation modeling layer 310 may perform modeling on the computational power of the core and the power consumption of the core, to obtain a curve relationship between the computational power of and the power consumption of the core. For another example, the computation modeling layer 310 may perform modeling on the IOPS of the core and the power consumption of the core, to obtain a curve relationship between the IOPS and the power consumption of the core. For another example, the computation modeling layer 310 may calculate power consumption when the core is in an idle (idle) state.

After obtaining the modeling relationship between the pieces of data of the core, the computation modeling layer 310 may calculate a value of an operating performance point (operating performance point, OPP) of the core, an energy efficiency value, and a mapping relationship between computational power and power consumption of the core based on the modeling relationship between the pieces of data of the core. The value of the OPP refers to an operating state and a performance level of a chip during operation. One chip is provided with a plurality of values of the OPP, and each value of the OPP corresponds to different performance and power consumption. The electronic device may flexibly control the operating state and the performance level of the chip by using the value of the OPP, to balance performance and power consumption of the chip. The energy efficiency value calculated by the computation modeling layer 310 is a current energy efficiency value of each core.

The evaluation layer 320 is configured to perform quantitative evaluation on energy efficiency of the core based on the mathematical model of the computation modeling layer 310. Specifically, the evaluation layer 320 may calculate energy efficiency of the core under a specific workload based on an actual chip design or the simulation result. The evaluation layer 320 is to provide chip designers and researchers with a quantizable performance evaluation tool, so that the chip designers and the researchers can quickly compare and optimize energy efficiency of different design schemes.

The evaluation layer 320 may calculate an optimal energy efficiency value of each core based on a value of an OPP of each core and the mapping relationship between the computational power and the power consumption of the core. For example, the evaluation layer 320 evaluates the computational power of the core based on the IOPS. The evaluation layer 320 may construct a function relationship between the IOPS and the power consumption of each core based on the mapping relationship between the computational power and the power consumption of each core. The evaluation layer 320 may select, based on a position of each value of the OPP of the core in a function of the IOPS and the power consumption, a value of an OPP corresponding to maximum IOPS and minimum power consumption, and calculate the optimal energy efficiency value of each core based on IOPS and power consumption that correspond to the value of the OPP.

The service layer 330 is a final application layer of the energy efficiency model 300, and is configured to provide a service and a tool for energy efficiency evaluation, to support a design and decision-making process of the chip, so as to better meet an energy efficiency requirement and objective. In embodiments of this application, after receiving the current energy efficiency value and the optimal energy efficiency value of each core, the service layer 330 detects a relationship between the current energy efficiency value and the optimal energy efficiency value of the core in each energy efficiency domain.

In a case, when the service layer 330 detects that a current energy efficiency value of each core in an energy efficiency domain is greater than an optimal energy efficiency value, it indicates that there are a large quantity of cores in the energy efficiency domain, and computational power is sufficient. In this case, the service layer 330 may migrate a part of the cores in a current energy efficiency domain to a low-level energy efficiency domain, so that current energy efficiency values of remaining cores are reduced to optimal energy efficiency values, to reduce power consumption of the electronic device.

In another case, when the service layer 330 detects that a current energy efficiency value of each core in an energy efficiency domain is less than an optimal energy efficiency value, it indicates that there are a small quantity of cores in the energy efficiency domain, and computational power is insufficient. In this case, the service layer 330 may migrate a part of the cores from a low-level energy efficiency domain to a current energy efficiency domain, so that current energy efficiency values of the cores in the current energy efficiency domain are increased to optimal energy efficiency values, to reduce power consumption of the electronic device.

In another case, when the service layer 330 detects that current energy efficiency values of a part of cores in an energy efficiency domain are less than optimal energy efficiency values and current energy efficiency values of a part of the cores are greater than optimal energy efficiency values, it indicates that the cores in the energy efficiency domain process compute tasks unevenly. In this case, the service layer 330 may allocate a part of the compute tasks in a task queue of the cores whose current energy efficiency values are less than the optimal energy efficiency values to a task queue of the cores whose current energy efficiency values are greater than optimal energy efficiency values, so that current energy efficiency values of cores in a current energy efficiency domain tend to be optimal energy efficiency values of the cores, to reduce power consumption of the electronic device.

In embodiments of this application, in a process of core migration, the service layer 330 preferentially migrates cores that belong to a same chip to a same energy efficiency domain, to avoid a case in which the cores in the same chip have different service lives, a service life of the chip is reduced, and power consumption of the chip is increased due to allocation of the cores in the same chip to different energy efficiency domains to execute different compute tasks. For example, it is assumed that there are three CPU cores in the energy efficiency domain 1, and there is one CPU core in the energy efficiency domain 2. If computational power of the cores in the energy efficiency domain 1 is insufficient, the service layer 330 may migrate the CPU core in the energy efficiency domain 2 to the energy efficiency domain 1, to increase the computational power of the energy efficiency domain 1.

In addition, if the service layer 330 migrates a core from a lower-level energy efficiency domain, all cores in the lower-level energy efficiency domain may be sorted based on performance in descending order, and a high-performance core is preferentially migrated to a high-level energy efficiency domain. If the service layer 330 migrates a core from a current energy efficiency domain, all cores in the current energy efficiency domain may be sorted based on performance in descending order, and a low-performance core is preferentially migrated to a low-level energy efficiency domain.

In embodiments of this application, the energy efficiency management unit 110 may optimize an allocation result of an energy efficiency model 220 according to a rule that is set by a user, so that each core can run based on a requirement of the user, to improve practicability of the electronic device. For example, the energy efficiency management unit 110 may optimize the allocation result of the energy efficiency model 300 based on an energy saving mode, an energy efficiency mode, and a power limiting mode that are configured by the electronic device. For example, when the energy efficiency management unit 110 requires that the allocation result of the energy efficiency model 300 meets the energy saving mode, the energy efficiency model 300 may allocate more cores to a low-level energy efficiency domain, so that the more cores process compute tasks in a low-power consumption state, to reduce power consumption of the electronic device. For another example, when the energy efficiency management unit 110 requires that the allocation result of the energy efficiency model 300 meets the energy efficiency mode, the energy efficiency model 300 causes the cores to be allocated to the energy efficiency domains in a manner that achieves optimal energy efficiency, so that the electronic device operates in a state of a lowest energy efficiency. For another example, when the energy efficiency management unit 110 requires that the allocation result of the energy efficiency model 300 meets the power limiting mode, the energy efficiency model 300 can make as many cores as possible in the high-level energy efficiency domain when computational power for processing the compute task in each energy efficiency domain is met, so that the electronic device quickly processes the compute task, to improve operating efficiency of the electronic device.

The task management unit 120 may obtain various compute tasks of the electronic device from a system service set. The system service set stores compute tasks generated when the electronic device performs various functions. The compute tasks may be classified into an I/O path task, a background value-added task, a background analysis task, a management plane data transmission task, and the like. The I/O path task is a process of processing an input and an output in a computer system, so that a computer can interact and communicate with an external environment, to implement data input and output functions. The I/O path task may include file replication, file movement, data import/export, network transmission, and the like.

The background value-added task is a task executed in a background of the computer system, and is for improving a function, performance, and efficiency of the system, so that the function, security, the performance, and user experience of the system can be improved, and a workload of manual operations needed by the user can be reduced. The background value-added task may include data cleanup and processing, a scheduled task, cache management, security monitoring and protection, and the like.

The background analysis task is a data analysis task executed in the background of the computer system. The background analysis task may process, mine, and analyze data by using specific algorithms and technologies, to obtain a potential insight or provide useful information. The background analysis tasks may include data mining, fault detection and prediction, user behavior analysis, data quality analysis and repair, and the like.

The management plane data transmission task is a task and a process of management information transmission and exchange during computer network management. The management plane data transmission task generally relates to communication between a network device and a management system, to implement management operations such as monitoring, configuration, and troubleshooting on the network device. The management plane data transmission task may include user management, configuration management, log management, monitoring management, task scheduling, statistics reporting, data backup/restoration, and the like.

After obtaining each compute task, the task management unit 120 may identify and collect statistics on attribute information of the compute task. The attribute information may be time, load, or the like for executing the compute task. Generally, computational power resources of the electronic device are limited, and a quantity of compute tasks that are concurrently executed is also limited. In this case, the task management unit 120 may add various types of labels to the compute tasks, and sequentially execute the compute tasks based on one or more types of labels. For example, the task management unit 120 may add priority labels to the compute tasks based on importance of the compute tasks. A label with a high priority is added to a compute task with high importance, so that the compute task is executed preferentially. A label with a low priority is added to a compute task with low importance, so that the compute task does not need to be executed preferentially. For another example, the task management unit 120 may add energy efficiency weight value labels to the compute tasks based on energy efficiency values for executing the compute tasks. A label with a large energy efficiency weight value is added to a compute task with a high energy efficiency value, so that the compute task is executed preferentially. A label with a small energy efficiency weight value is added to a compute task with a low energy efficiency value, so that the compute task does not need to be executed preferentially. Another label is also included. Examples are not listed one by one in this application.

After receiving the attribute information and the various types of labels that are of the compute tasks and that are sent by the task management unit 120, the task scheduling unit 130 may determine performance priorities and energy efficiency priorities of the compute tasks based on the attribute information and the various types of labels of the compute tasks. In embodiments of this application, a compute task with a high performance priority is generally executed by a core in a high-level energy efficiency domain. A compute task with a low performance priority is generally executed by a core in a low-level energy efficiency domain. A compute task with a high energy efficiency priority is generally executed by a core in a high-level energy efficiency domain. A compute task with a low energy efficiency priority is generally executed by a core in a low-level energy efficiency domain.

After obtaining the performance priority and the energy efficiency priority of each compute task, the task scheduling unit 130 may perform scheduling calculation on the performance priority and the energy efficiency priority of the compute task by using a scheduling objective function, to obtain a task feature vector (task feature vector) of each compute task. The task feature vector is a representation method for converting a key attribute and a feature of the compute task into a numerical form, so that a machine learning model or algorithm can be for processing and analyzing the task feature vector. In embodiments of this application, the task feature vector includes two features: a performance priority and an energy efficiency priority. A performance priority feature represents a performance level of the compute task, and describes a quantitative value of a performance requirement of the compute task. A larger value of the performance priority feature indicates a higher priority of the compute task. A smaller value of the performance priority feature indicates a lower priority of the compute task. An energy efficiency priority feature represents an energy efficiency level of the compute task, and describes a quantitative value of an energy efficiency requirement of the compute task. A larger value of the energy efficiency priority feature indicates a higher priority of the compute task. A smaller value of the energy efficiency priority feature indicates a lower priority of the compute task.

The energy efficiency scheduling system 100 may configure an allocation ratio of the compute tasks for the energy efficiency domains. The allocation ratio of the compute task is generally related to the application scenario of the electronic device. The energy efficiency scheduling system 100 may obtain the quantity of energy efficiency domains based on the application scenario of the electronic device, and determine a quantity of "terms" of the allocation ratio of compute tasks based on the quantity of energy efficiency domains. In the different application scenarios, quantities of compute tasks that need to be processed based on the running policies in the different energy efficiency domains are different. The energy efficiency scheduling system 100 may use the quantity of compute tasks processed according to the running policies in the different energy efficiency domains as a sum of values of the "terms", to obtain allocation ratios of compute tasks in the different application scenarios.

After receiving the task feature vectors that are of the compute tasks and that are calculated by the task scheduling unit 130, the quantization unit 140 may sort the compute tasks based on sizes of the task feature vectors. Then, the quantization unit 140 allocates the compute tasks to the energy efficiency domains based on an allocation ratio of the compute tasks corresponding to a current application scenario of the electronic device, so that the compute tasks having different performance requirements may be allocated to processing queues of cores having corresponding performance for processing. In a process of allocating the compute tasks, the quantization unit 140 allocates a compute task with a large task feature vector value to a high-level energy efficiency domain, and allocates a compute task with a small task feature vector value to a low-level energy efficiency domain.

In embodiments of this application, when detecting that a current energy efficiency value of each core in an energy efficiency domain deviates from an optimal energy efficiency value, the service layer 330 may adjust a quantity of compute tasks in each energy efficiency domain, so that the current energy efficiency value of each core in the energy efficiency domain tends to be the optimal energy efficiency value.

In a case, when the service layer 330 detects that a current energy efficiency value of each core in the energy efficiency domain is greater than an optimal energy efficiency value, it indicates that there are a large quantity of cores in the energy efficiency domain, and computational power is sufficient. In this case, the service layer 330 may allocate compute tasks in a low-level energy efficiency domain to a task queue of each core in a current energy efficiency domain, so that a current energy efficiency value of each core in the current energy efficiency domain is reduced to an optimal energy efficiency value, to reduce power consumption of the electronic device.

In another case, when the service layer 330 detects that a current energy efficiency value of each core in the energy efficiency domain is less than an optimal energy efficiency value, it indicates that there are a small quantity of cores in the energy efficiency domain, and computational power is insufficient. In this case, the service layer 330 may allocate compute tasks in a current energy efficiency domain to a task queue of each core in a higher-level energy efficiency domain or a lower-level energy efficiency domain, so that a current energy efficiency value of the core in the current energy efficiency domain is increased to an optimal energy efficiency value, to reduce power consumption of the electronic device.

When the service layer 330 migrates a core from an energy efficiency domain to another energy efficiency domain, compute tasks in a task queue of the core needs to be migrated to a task queue of another core, causing additional computing overheads of the core and an increase in power consumption. In embodiments of this application, the service layer 330 preferentially makes, in a manner of adjusting a quantity of compute tasks in each energy efficiency domain, a current energy efficiency value of each core in the energy efficiency domain tend to be an optimal energy efficiency value. If the service layer 330 cannot make, in the manner of adjusting the quantity of compute tasks in each energy efficiency domain, the current energy efficiency value of each core in the energy efficiency domain tend to be the optimal energy efficiency value, the service layer 330 makes, in a manner of adjusting a quantity of cores in each energy efficiency domain, the current energy efficiency value of each core in the energy efficiency domain tend to be the optimal energy efficiency value.

Generally, compute tasks of the electronic device may be classified into a foreground task and a background task. The foreground task generally needs more compute resources and real-time feedbacks from a user interface, and generally needs to be executed by a foreground service or a foreground process. The foreground task may include running an application program, browsing a web page, playing media, and the like. The background task is a task that is run without a direct operation or attention of a user, and generally needs to be executed by a background service or a background process. The background task may include data synchronization, backup, update, scheduled tasks, and the like. In comparison with the foreground task, the background task generally needs fewer compute resources and causes minimum interference to user operations. In embodiments of this application, because the foreground task is more important than the background task, the energy efficiency scheduling system 100 generally allocates the foreground task to a core in a high-level energy efficiency domain for execution as much as possible, and allocates the background task to a core in a low-level energy efficiency domain for execution as much as possible.

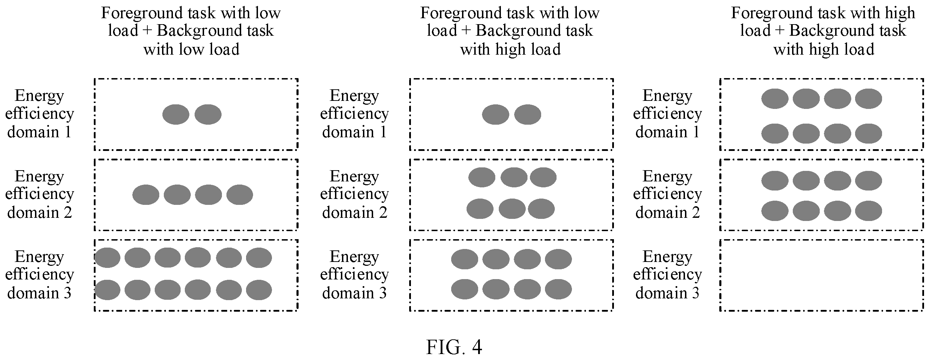

As shown in FIG. 4, it is assumed that an energy efficiency domain 1 is a high-level energy efficiency domain, an energy efficiency domain 2 is a medium-level energy efficiency domain, and an energy efficiency domain 3 is a low-level energy efficiency domain. When a foreground task of an electronic device is in a low-load state and a background task is in a low-load state, the energy efficiency scheduling system 100 allocates more cores to the energy efficiency domain 3, and allocates fewer cores to the energy efficiency domain 1. When the foreground task of the electronic device is in a low-load state and the background task is in a high-load state, the energy efficiency scheduling system 100 allocates more cores to the energy efficiency domain 3, allocates a part of cores to the energy efficiency domain 2, and allocates fewer cores to the energy efficiency domain 1. When the foreground task of the electronic device is in a high-load state and the background task is in a high-load state, the energy efficiency scheduling system 100 allocates more cores to the energy efficiency domain 1, and allocates remaining cores to the energy efficiency domain 2.

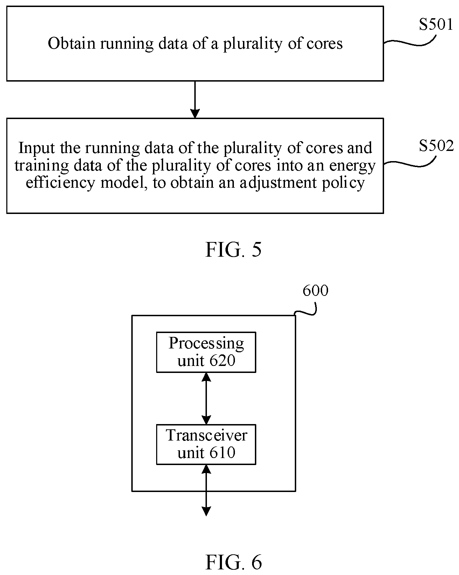

FIG. 5 is a schematic flowchart of a scheduling method according to an embodiment of this application. As shown in FIG. 5, the scheduling method is performed by a processor in an electronic device. A specific implementation procedure is as follows.

### S501: Obtain running data of a plurality of cores.

In an initialization phase such as power-on or restart of the electronic device, each core of the electronic device may not execute a related compute task. To cause each core to quickly enter a high energy efficiency state to operate, a developer may pre-store some configuration data in the electronic device. When the electronic device is in the initialization phase, each core may quickly enter, based on the configuration data, the high energy efficiency state to operate.

The configuration data may include a quantity of energy efficiency domains of the electronic device in different application scenarios. In this embodiment of this application, a quantity of energy efficiency domains that is set by an energy efficiency scheduling system for the electronic device is related to an application scenario of the electronic device. The energy efficiency scheduling system may determine the quantity of energy efficiency domains based on a current application scenario of the electronic device, and select an appropriate quantity of running policies for the plurality of cores. The energy efficiency scheduling system associates a quantity of running policies run by the cores with an application scenario, to better increase energy efficiency of the electronic device in different application scenarios.

The configuration data may include allocation ratios of cores configured for energy efficiency domains of the electronic device in the different application scenarios. In this embodiment of this application, the energy efficiency scheduling system allocates a plurality of cores of the electronic device to the energy efficiency domains based on an allocation ratio of cores corresponding to the current application scenario of the electronic device, so that each core operates in an optimal energy efficiency state, to increase energy efficiency of the electronic device.

The configuration data may include allocation ratios of compute tasks configured for energy efficiency domains of the electronic device in the different application scenarios. In this embodiment of this application, the energy efficiency scheduling system allocates a plurality of compute tasks to the energy efficiency domains based on an allocation ratio of compute tasks corresponding to the current application scenario of the electronic device, so that a quantity of compute tasks allocated to each energy efficiency domain matches computational power of the energy efficiency domain, to increase energy efficiency of the electronic device.

In the initialization phase of the electronic device, the processor obtains cores in each chip inside the electronic device, and sorts the cores based on levels of performance of the cores. The processor allocates the plurality of cores of the electronic device to the energy efficiency domains based on the allocation ratio of the cores corresponding to the current application scenario of the electronic device, so that each core operates in the optimal energy efficiency state. In a process of allocating the cores, the processor allocates a high-performance core to a high-level energy efficiency domain, and allocates a low-performance core to a low-level energy efficiency domain. After the electronic device enters an operating state, the processor may detect the running data of each core in real time. The running data is state data of each core at a current moment, such as a main frequency, a utilization rate of computational power, power consumption, a temperature, a voltage, and IOPS. S502: Input the running data of the plurality of cores and training data of the plurality of cores into an energy efficiency model, to obtain an adjustment policy.

After obtaining the running data of each core, the processor inputs the running data and the training data of each core into the energy efficiency model. The energy efficiency model performs energy efficiency modeling based on the training data and real-time running data of each core, to obtain a modeling relationship between the pieces of data of each core. After obtaining the modeling relationship between the pieces of data of the core, the energy efficiency model may calculate a value of an OPP of the core, energy efficiency, and a mapping relationship between computational power and power consumption of the core based on the modeling relationship between the pieces of data of the core. The energy efficiency model may calculate an optimal energy efficiency value of each core based on a value of an OPP of each core and the mapping relationship between the computational power and the power consumption of the core. Energy efficiency of each core calculated by the energy efficiency model based on the modeling relationship between the pieces of data of the core is a current energy efficiency value.

After obtaining the current energy efficiency value and the optimal energy efficiency value of each core, the energy efficiency model detects a relationship between the current energy efficiency value of the core and the optimal energy efficiency value of the core in each energy efficiency domain, and outputs an adjustment policy, so that the processor adjusts a quantity of cores in each current energy efficiency domain. The adjustment policy may include a plurality of adjustment sub-policies, and each adjustment sub-policy is for adjusting a quantity of cores in an energy efficiency domain. In a case, when the energy efficiency model detects that a current energy efficiency value of each core in an energy efficiency domain is greater than an optimal energy efficiency value, it indicates that there are a large quantity of cores in the energy efficiency domain, and computational power is sufficient. In this case, the energy efficiency model may output an adjustment sub-policy. The adjustment sub-policy may indicate the processor to migrate a part of the cores in a current energy efficiency domain to a low-level energy efficiency domain, so that current energy efficiency values of remaining cores are reduced to optimal energy efficiency values, to reduce power consumption of the electronic device.

In another case, when the energy efficiency model detects that a current energy efficiency value of each core in an energy efficiency domain is less than an optimal energy efficiency value, it indicates that there are a small quantity of cores in the energy efficiency domain, and computational power is insufficient. In this case, the energy efficiency model may output an adjustment sub-policy. The adjustment sub-policy may indicate the processor to migrate a part of the cores from a low-level energy efficiency domain to a current energy efficiency domain, so that current energy efficiency values of the cores in the current energy efficiency domain are increased to optimal energy efficiency values, to reduce power consumption of the electronic device.

In another case, when the energy efficiency model detects that current energy efficiency values of a part of cores in an energy efficiency domain are less than optimal energy efficiency values and current energy efficiency values of a part of the cores are greater than optimal energy efficiency values, it indicates that the cores in the energy efficiency domain process compute tasks unevenly. In this case, the energy efficiency model may output an adjustment sub-policy. The adjustment sub-policy may indicate the processor to allocate a part of the compute tasks in a task queue of the cores whose current energy efficiency values are less than the optimal energy efficiency values to a task queue of the cores whose current energy efficiency values are greater than optimal energy efficiency values, so that current energy efficiency values of cores in a current energy efficiency domain tend to be optimal energy efficiency values of the cores, to reduce power consumption of the electronic device.

In this embodiment of this application, the processor calculates the energy efficiency values of the plurality of cores by using the energy efficiency model, and then adjusts the running policies of the cores based on the energy efficiency values of the cores, so that the cores select appropriate running policies to execute compute tasks. In this way, power consumption of the cores is reduced while use performance of the cores is maintained, to increase energy efficiency of the electronic device.

The processor may obtain various compute tasks of the electronic device from a system service set, and identify attribute information and various types of labels of the compute tasks. The processor may determine performance priorities and energy efficiency priorities of the compute tasks based on the attribute information and the various types of labels of the compute tasks. After obtaining the performance priority and the energy efficiency priority of each compute task, the processor may perform scheduling calculation on the performance priority and the energy efficiency priority of the compute task by using a scheduling objective function, to obtain a task feature vector of each compute task.

After obtaining the task feature vectors of the compute tasks, the processor may sort the compute tasks based on sizes of the task feature vectors. The processor allocates the compute tasks to energy efficiency domains based on an allocation ratio of the compute tasks corresponding to a current application scenario of the electronic device, so that the compute tasks having different performance requirements may be allocated to processing queues of cores having corresponding performance for processing. In a process of allocating the compute tasks, the processor allocates a compute task with a large task feature vector value to a high-level energy efficiency domain, and allocates a compute task with a small task feature vector value to a low-level energy efficiency domain.

When detecting that a current energy efficiency value of each core in an energy efficiency domain deviates from an optimal energy efficiency value, the processor may adjust a quantity of compute tasks in each energy efficiency domain, so that the current energy efficiency value of each core in the energy efficiency domain tends to be the optimal energy efficiency value.

In a case, when the processor detects that a current energy efficiency value of each core in the energy efficiency domain is greater than an optimal energy efficiency value, it indicates that there are a large quantity of cores in the energy efficiency domain, and computational power is sufficient. In this case, the processor may allocate compute tasks in a low-level energy efficiency domain to a task queue of each core in a current energy efficiency domain, so that a current energy efficiency value of each core in the current energy efficiency domain is reduced to an optimal energy efficiency value, to reduce power consumption of the electronic device.

In another case, when the processor detects that a current energy efficiency value of each core in the energy efficiency domain is less than an optimal energy efficiency value, it indicates that there are a small quantity of cores in the energy efficiency domain, and computational power is insufficient. In this case, the processor may allocate compute tasks in a current energy efficiency domain to a task queue of each core in a higher-level energy efficiency domain or a lower-level energy efficiency domain, so that a current energy efficiency value of the core in the current energy efficiency domain is increased to an optimal energy efficiency value, to reduce power consumption of the electronic device.

When the processor migrates a core from an energy efficiency domain to another energy efficiency domain, compute tasks in a task queue of the core needs to be migrated to a task queue of another core, causing additional computing overheads of the core and an increase in power consumption. Therefore, the processor preferentially makes, in a manner of adjusting a quantity of compute tasks in each energy efficiency domain, a current energy efficiency value of each core in the energy efficiency domain tend to be an optimal energy efficiency value. If the processor cannot make, in the manner of adjusting the quantity of compute tasks in each energy efficiency domain, the current energy efficiency value of each core in the energy efficiency domain tend to be the optimal energy efficiency value, the processor makes, in a manner of adjusting a quantity of cores in each energy efficiency domain, the current energy efficiency value of each core in the energy efficiency domain tend to be the optimal energy efficiency value.

FIG. 6 is a diagram of a structure of a scheduling apparatus according to an embodiment of this application. As shown in FIG. 6, the scheduling apparatus 600 may be divided into a transceiver unit 610 and a processing unit 620 based on executed functions. The functions performed by the units of the scheduling apparatus 600 are specifically as follows.

The transceiver unit 610 is configured to obtain running data of a plurality of cores. The running data is state data of a core obtained when the core executes a compute task. The processing unit 620 is configured to input the running data of the plurality of cores and training data of the plurality of cores into an energy efficiency model, to obtain an adjustment policy. The adjustment policy is for adjusting quantities of different types of cores. The training data is an attribute parameter of the core. The different types of cores are cores that execute compute tasks according to different running policies, and the running policy is a state parameter of the core used when the core executes the compute task.

In an implementation, the processing unit 620 is further configured to determine a quantity of energy efficiency domains based on a current application scenario of an energy efficiency scheduling system. The quantity of energy efficiency domains is associated with an application scenario of the energy efficiency scheduling system. The processing unit 620 is further configured to allocate the plurality of cores to different energy efficiency domains.

In an implementation, the processing unit 620 is specifically configured to allocate the plurality of cores to the different energy efficiency domains based on an allocation ratio of cores corresponding to the current application scenario of the energy efficiency scheduling system.

In an implementation, the processing unit 620 is specifically configured to determine a current energy efficiency value and an optimal energy efficiency value of each core based on the running data of the plurality of cores and the training data of the plurality of cores. The processing unit 620 is specifically configured to: when a current energy efficiency value of each core in a first energy efficiency domain is greater than an optimal energy efficiency value of the core, obtain a first adjustment sub-policy. The first adjustment sub-policy is for migrating a part of the cores in the first energy efficiency domain to another energy efficiency domain. The different energy efficiency domains include the first energy efficiency domain. The adjustment policy includes the first adjustment sub-policy. The processing unit 620 is specifically configured to: when the current energy efficiency value of each core in the first energy efficiency domain is less than the optimal energy efficiency value of the core, obtain a second adjustment sub-policy. The second adjustment sub-policy is for migrating a core in another energy efficiency domain to the first energy efficiency domain. The adjustment policy includes the second adjustment sub-policy.

In an implementation, the processing unit 620 is further configured to obtain a plurality of compute tasks of the energy efficiency scheduling system. The processing unit 620 is further configured to determine performance priorities and energy efficiency priorities of the plurality of compute tasks based on attribute information of the plurality of compute tasks and labels of the compute tasks. The attribute information includes one or more of execution time and load. The label includes one or more of an importance level and an energy efficiency weight value. The processing unit 620 is further configured to input the performance priorities and the energy efficiency priorities of the plurality of compute tasks into a scheduling objective function, to obtain task feature vectors of the plurality of compute tasks. The processing unit 620 is further configured to allocate the plurality of compute tasks to task queues of the different types of cores based on the task feature vectors of the plurality of compute tasks.

An embodiment of this application further provides an electronic device. The electronic device includes a processor. The processor may perform FIG. 1 to FIG. 5 and the foregoing corresponding claimed technical solutions, so that the electronic device has technical effects of the foregoing claimed technical solutions.

An embodiment of this application further provides a computer-readable storage medium. The computer-readable storage medium includes computer program instructions. When the computer program instructions are executed by an electronic device, the compute device performs any method described in FIG. 1 to FIG. 5 and the corresponding description content.

An embodiment of this application further provides a computer program product including instructions. The computer program product stores the instructions. When the instructions are executed by an electronic device, the electronic device is caused to implement any method described in FIG. 1 to FIG. 5 and the corresponding description content.

A person of ordinary skill in the art may be aware that the units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application. In addition, aspects or features in embodiments of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

In the foregoing embodiments, all or a part of the scheduling apparatus 600 in FIG. 6 may be implemented by software, hardware, firmware, or any combination thereof. When software is used for implementation, all or a part of the scheduling apparatus 600 in FIG. 6 may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, an SSD), or the like.

It should be understood that sequence numbers of the foregoing processes do not mean execution sequences in various embodiments of this application. The execution sequences of the processes need to be determined based on functions and internal logic of the processes, and should not be construed as any limitation on the implementation processes of embodiments of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

When a function is implemented in a form of a software functional unit and sold or used as an independent product, the function may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, an access network device, or the like) to perform all or a part of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

## Claims

1. A scheduling method, wherein the method is performed by an energy efficiency scheduling system, and the method comprises:
obtaining running data of a plurality of cores (cores), wherein the running data is state data of the core obtained when the core executes a compute task; and
inputting the running data of the plurality of cores and training data of the plurality of cores into an energy efficiency model, to obtain an adjustment policy, wherein the adjustment policy is for adjusting quantities of different types of cores, the training data is an attribute parameter of the core, the different types of cores are cores that execute compute tasks according to different running policies, and the running policy is a state parameter of the core used when the core executes the compute task.

2. The method according to claim 1, wherein before the obtaining the running data of the plurality of cores, the method further comprises:
determining a quantity of energy efficiency domains based on a current application scenario of the energy efficiency scheduling system, wherein the quantity of energy efficiency domains is associated with an application scenario of the energy efficiency scheduling system; and
allocating the plurality of cores to different energy efficiency domains.

3. The method according to claim 2, wherein the allocating the plurality of cores to the different energy efficiency domains specifically comprises:
allocating the plurality of cores to the different energy efficiency domains based on an allocation ratio of cores corresponding to the current application scenario of the energy efficiency scheduling system.

4. The method according to claim 2 or 3, wherein the inputting the running data of the plurality of cores and the training data of the plurality of cores into the energy efficiency model, to obtain the adjustment policy specifically comprises:
determining a current energy efficiency value and an optimal energy efficiency value of each core based on the running data of the plurality of cores and the training data of the plurality of cores; and
when a current energy efficiency value of each core in a first energy efficiency domain is greater than an optimal energy efficiency value of the core, obtaining a first adjustment sub-policy, wherein the first adjustment sub-policy is for migrating a part of the cores in the first energy efficiency domain to another energy efficiency domain, the different energy efficiency domains comprise the first energy efficiency domain, and the adjustment policy comprises the first adjustment sub-policy; or
when the current energy efficiency value of each core in the first energy efficiency domain is less than the optimal energy efficiency value of the core, obtaining a second adjustment sub-policy, wherein the second adjustment sub-policy is for migrating a core in another energy efficiency domain to the first energy efficiency domain, and the adjustment policy comprises the second adjustment sub-policy.

5. The method according to any one of claims 2 to 4, wherein the method further comprises:
obtaining a plurality of compute tasks of the energy efficiency scheduling system;
determining performance priorities and energy efficiency priorities of the plurality of compute tasks based on attribute information of the plurality of compute tasks and labels of the compute tasks, wherein the attribute information comprises one or more of execution time and load, and the label comprises one or more of an importance level and an energy efficiency weight value;
inputting the performance priorities and the energy efficiency priorities of the plurality of compute tasks into a scheduling objective function, to obtain task feature vectors of the plurality of compute tasks; and
allocating the plurality of compute tasks to task queues of the different types of cores based on the task feature vectors of the plurality of compute tasks.

6. A scheduling apparatus, comprising:
a transceiver unit, configured to obtain running data of a plurality of cores, wherein the running data is state data of the core obtained when the core executes a compute task; and
a processing unit, configured to input the running data of the plurality of cores and training data of the plurality of cores into an energy efficiency model, to obtain an adjustment policy, wherein the adjustment policy is for adjusting quantities of different types of cores, the training data is an attribute parameter of the core, the different types of cores are cores that execute compute tasks according to different running policies, and the running policy is a state parameter of the core used when the core executes the compute task.

7. The apparatus according to claim 6, wherein the processing unit is further configured to: determine a quantity of energy efficiency domains based on a current application scenario of an energy efficiency scheduling system, wherein the quantity of energy efficiency domains is associated with an application scenario of the energy efficiency scheduling system; and
allocate the plurality of cores to different energy efficiency domains.

8. The apparatus according to claim 7, wherein the processing unit is specifically configured to allocate the plurality of cores to the different energy efficiency domains based on an allocation ratio of cores corresponding to the current application scenario of the energy efficiency scheduling system.

9. The apparatus according to claim 7 or 8, wherein the processing unit is specifically configured to: determine a current energy efficiency value and an optimal energy efficiency value of each core based on the running data of the plurality of cores and the training data of the plurality of cores; and
when a current energy efficiency value of each core in a first energy efficiency domain is greater than an optimal energy efficiency value of the core, obtain a first adjustment sub-policy, wherein the first adjustment sub-policy is for migrating a part of the cores in the first energy efficiency domain to another energy efficiency domain, the different energy efficiency domains comprise the first energy efficiency domain, and the adjustment policy comprises the first adjustment sub-policy; or
when the current energy efficiency value of each core in the first energy efficiency domain is less than the optimal energy efficiency value of the core, obtain a second adjustment sub-policy, wherein the second adjustment sub-policy is for migrating a core in another energy efficiency domain to the first energy efficiency domain, and the adjustment policy comprises the second adjustment sub-policy.

10. The apparatus according to any one of claims 7 to 9, wherein the processing unit is further configured to: obtain a plurality of compute tasks of the energy efficiency scheduling system;
determine performance priorities and energy efficiency priorities of the plurality of compute tasks based on attribute information of the plurality of compute tasks and labels of the compute tasks, wherein the attribute information comprises one or more of execution time and load, and the label comprises one or more of an importance level and an energy efficiency weight value;
input the performance priorities and the energy efficiency priorities of the plurality of compute tasks into a scheduling objective function, to obtain task feature vectors of the plurality of compute tasks; and
allocate the plurality of compute tasks to task queues of the different types of cores based on the task feature vectors of the plurality of compute tasks.

11. An compute device, comprising:
at least one memory; and
at least one processor, wherein the processor comprises a plurality of cores, and one of the at least one processor is configured to execute instructions stored in the memory, to cause the compute device to perform the method according to any one of claims 1 to 5.

12. A computer-readable storage medium, comprising computer program instructions, wherein when the computer program instructions are executed by a compute device, the compute device performs the method according to any one of claims 1 to 5.

13. A computer program product comprising instructions, wherein the computer program product stores the instructions, and when the instructions are executed by a compute device, the compute device is caused to implement the method according to any one of claims 1 to 5.
